# EUROPEAN PATENT APPLICATION

(11) **EP 4 841 474 A1**
(43) Date of publication of application: **18.11.2026**
(21) Application number: 24916641.4
(22) Date of filing: 10.12.2024
(51) Int. Cl.: G06F 16/783

(54) **MEDIA DATA GENERATION METHOD AND APPARATUS, ELECTRONIC DEVICE AND STORAGE MEDIUM**

(30) Priority: 11.01.2024 CN 202410045650
(71) Applicant: Beijing Zitiao Network Technology Co., Ltd., Beijing 100190 (CN)
(72) Inventor: HE, Qianbin, Chaoyang District, Beijing 100028 (CN); FAN, Yiming, Chaoyang District, Beijing 100028 (CN)
(74) Representative: Grünecker Patent- und Rechtsanwälte PartG mbB
(86) International application number: PCT/CN2024/138012
(87) International publication number: WO 2025/148594

(57) **Abstract**

Embodiments of the present disclosure provide a media data generation method and apparatus, an electronic device, and a storage medium. The method includes: loading reference media data, and displaying a first interactive window on a target interactive page, where the first interactive window includes the reference media data and a first control set; in response to a click event on a target control in the first control set, determining a reference feature corresponding to the reference media data based on a feature identification corresponding to the target control, and displaying the reference feature in the first interactive window; in response to a confirmation event for the reference feature, determining first prompt information based on the reference media data and the feature identification, and displaying the first prompt information on the target interactive page; and generating target media data based on the first prompt information and the reference feature, and displaying the target media data on the target interactive page.

## Description

### CROSS-REFERENCE TO RELATED APPLICATION(S)

The present application claims priority to Chinese Patent Application No. 202410045650.1, filed with the China National Intellectual Property Administration on January 11, 2024 and entitled "MEDIA DATA GENERATION METHOD AND APPARATUS, ELECTRONIC DEVICE AND STORAGE MEDIUM", which is incorporated herein by reference in its entirety.

### FIELD

Embodiments of the present disclosure relate to computer processing technologies and, in particular, to a media data generation method and apparatus, an electronic device, and a storage medium.

### BACKGROUND

Intelligent media data generation is a technology that uses an intelligent tool to generate a target image or video that meets a preset requirement based on textual description content.

### SUMMARY

The present disclosure provides a media data generation method and apparatus, an electronic device, and a storage medium.

In a first aspect, embodiments of the present disclosure provide a media data generation method, including:
loading, in response to a media data loading event on a target interactive page, reference media data, and displaying a first interactive window on the target interactive page, the first interactive window including the reference media data and a first control set, where the first control set includes a candidate control, and the candidate control is configured for representing a feature identification associated with the reference media data and target media data;
determining, in response to a click event on a target control in the first control set, a reference feature corresponding to the reference media data based on a feature identification corresponding to the target control, and displaying the reference feature in the first interactive window;
determining, in response to a confirmation event for the reference feature, first prompt information based on the reference media data and the feature identification, and displaying the first prompt information on the target interactive page; and
generating, in response to a generation event for the target media data, the target media data based on the first prompt information and the reference feature, and displaying the target media data on the target interactive page.

In a second aspect, embodiments of the present disclosure further provide a media data generation apparatus, including:
a window display module, configured to load, in response to a media data loading event on a target interactive page, reference media data, and display a first interactive window on the target interactive page, the first interactive window including the reference media data and a first control set, where the first control set includes a candidate control, and the candidate control is configured for representing a feature identification associated with the reference media data and target media data;
a feature display module, configured to determine, in response to a click event on a target control in the first control set, a reference feature corresponding to the reference media data based on a feature identification corresponding to the target control, and display the reference feature in the first interactive window;
an information display module, configured to determine, in response to a confirmation event for the reference feature, first prompt information based on the reference media data and the feature identification, and display the first prompt information on the target interactive page; and
a media data generation module, configured to generate, in response to a generation event for the target media data, the target media data based on the first prompt information and the reference feature, and display the target media data on the target interactive page.

In a third aspect, embodiments of the present disclosure further provide an electronic device, where the electronic device includes:
one or more processors; and
a storage configured to store one or more programs,
where the one or more programs, when executed by the one or more processors, cause the one or more processors to implement the media data generation method according to any embodiment of the present disclosure.

In a fourth aspect, embodiments of the present disclosure further provide a storage medium including computer-executable instructions, the computer-executable instructions when executed by a computer processor, being configured to perform the media data generation method according to any embodiment of the present disclosure.

### BRIEF DESCRIPTION OF THE DRAWINGS

The above and other features, advantages and aspects of various embodiments of the present disclosure will become more apparent in combination with the drawings and with reference to the following "Detailed description" part. Throughout the drawings, the same or similar reference numbers refer to the same or similar elements. It should be understood that the drawings are schematic and that parts and elements are not necessarily drawn to scale.
Fig. 1 is a schematic flowchart of a media data generation method according to embodiments of the present disclosure;
Fig. 2 is a schematic diagram of a first interactive window according to embodiments of the present disclosure;
Fig. 3 is a schematic flowchart of another media data generation method according to embodiments of the present disclosure;
Fig. 4 is a schematic diagram of a display position of a second interactive window according to embodiments of the present disclosure;
Fig. 5 is a schematic flowchart of another media data generation method according to embodiments of the present disclosure;
Fig. 6 is a schematic diagram of a display position of a third interactive window according to embodiments of the present disclosure;
Fig. 7 is a schematic structural diagram of a media data generation apparatus according to embodiments of the present disclosure; and
Fig. 8 is a schematic structural diagram of an electronic device according to embodiments of the present disclosure.

### DETAILED DESCRIPTION OF EMBODIMENTS

Embodiments of the present disclosure will be described in more detail below with reference to the drawings. Although certain embodiments of the present disclosure are shown in the drawings, it should be understood that the present disclosure may be implemented in various forms and should not be construed as limited to the embodiments set forth herein; on the contrary, these embodiments are provided for a more thorough and complete understanding of the present disclosure. It should be understood that the drawings and embodiments of the present disclosure are only for exemplary purposes and are not intended to limit the protection scope of the present disclosure.

It should be understood that steps described in method implementations of the present disclosure may be performed in different orders and/or in parallel. Furthermore, the method implementations may include additional steps and/or omit performing illustrated steps. The scope of the present disclosure is not limited in this regard.

The term "include/comprise" and its variants used herein are open-ended inclusions, that is, "include/comprise but not limited to". The term "based on" is "at least partially based on". The term "an embodiment" means "at least one embodiment"; the term "another embodiment" means "at least one another embodiment"; the term "some embodiments" means "at least some embodiments". Relevant definitions of other terms will be given in the following description.

It should be noted that concepts such as "first" and "second" mentioned in the present disclosure are only used to distinguish different apparatuses, modules or units, and are not used to limit the order or interdependence of the functions performed by these apparatuses, modules or units.

It should be noted that the modifiers "a" and "a plurality of" mentioned in the present disclosure are illustrative rather than restrictive, and those skilled in the art should understand that unless otherwise explicitly indicated in the context, they should be understood as "one or more".

The names of messages or information exchanged between a plurality of apparatuses in the implementations of the present disclosure are for illustrative purposes only, and are not intended to limit the scope of these messages or information.

It may be understood that before using the technical solutions disclosed in various embodiments of the present disclosure, users should be informed of the type, range of use, use scenarios, etc. of personal information involved in the present disclosure and the authorization of the users should be obtained in an appropriate manner in accordance with relevant laws and regulations.

For example, in response to receiving an active request from a user, prompt information is sent to the user to clearly inform the user that the requested event will require access to and use of personal information of the user. As such, the user may independently choose, based on the prompt information, whether to provide the personal information to software or hardware, such as an electronic device, an application, a server or a storage medium, that performs the event of the technical solution of the present disclosure.

As an optional but non-limiting implementation, in response to receiving the active request from the user, the prompt information may be sent to the user in the form of, for example, a pop-up window, in which the prompt information may be presented in text. Furthermore, the pop-up window may also include a selection control for the user to choose whether to "agree" or "disagree" to provide the personal information to the electronic device.

It may be understood that the above process of notifying and obtaining user authorization is only illustrative and does not limit the implementations of the present disclosure, and other manners that satisfy relevant laws and regulations may also be applied in the implementations of the present disclosure.

It may be understood that the data involved in the technical solution (including but not limited to the data itself, acquisition or use of the data) should comply with requirements of corresponding laws, regulations and related provisions.

As mentioned above, intelligent media data generation is a technology that uses an intelligent tool to generate a target image or video that meets a preset requirement based on textual description content. The method of generating a target image or video based on textual description content requires the user to input accurate and clear textual description content. If the user's expression is inaccurate, or the user cannot clearly describe an intended effect, a large deviation will be caused between a generation result and the user's expectation, affecting the accuracy of the generation result and resulting in poor user experience.

The present disclosure provides a media data generation method and apparatus, an electronic device, and a storage medium, which may solve the problem that a generation result of media data does not meet a user's expectation, and improve the accuracy of the media data generation result. In embodiments of the present disclosure, a target interactive page is displayed, reference media data is loaded based on a media data loading event on the target interactive page, and a first interactive window is displayed on the target interactive page, where the first interactive window includes the reference media data and a first control set; then, in response to a click event on a target control in the first control set, a reference feature corresponding to the reference media data and a feature identification is determined based on the target control, and the reference feature is displayed in the first interactive window; then, in response to a confirmation event for the reference feature, first prompt information is determined based on the reference media data and the feature identification, and the first prompt information is displayed on the target interactive page; and in response to a generation event for target media data, the target media data is generated based on the first prompt information and the reference feature, and the target media data is displayed. In the embodiments of the present disclosure, the first prompt information and the reference feature are combined to implement visualization of a media data generation effect, solve the problem that the generation result of media data does not meet the user's expectation, and improve the accuracy of the media data generation result and user experience.

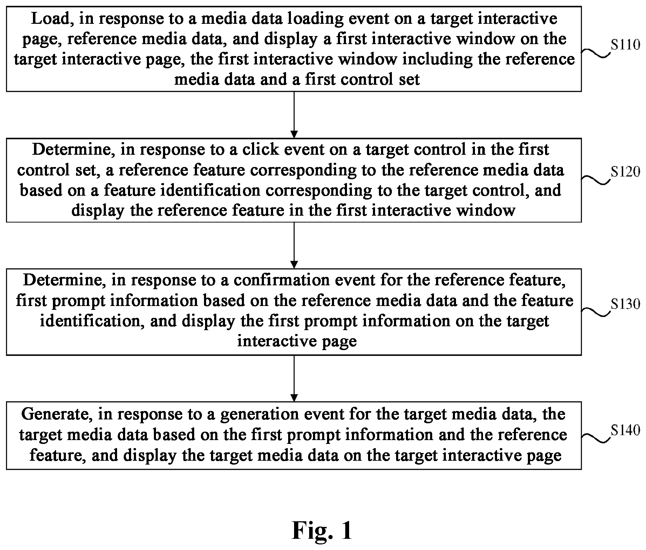

Fig. 1 is a schematic flowchart of a media data generation method according to embodiments of the present disclosure. The embodiments of the present disclosure are applicable to a scenario of intelligent drawing. The method may be performed by a media data generation apparatus, which may be implemented in the form of software and/or hardware, optionally, implemented by an electronic device, where the electronic device may be a mobile terminal, a PC or a server, etc.

As shown in Fig. 1, the method includes:
S110, in response to a media data loading event on a target interactive page, reference media data is loaded, and a first interactive window is displayed on the target interactive page, the first interactive window including the reference media data and a first control set.

The target interactive page is a preset page of an intelligent drawing tool. For example, the target interactive page is a home page or a front page of the intelligent drawing tool. The media data loading event is used to trigger a media data loading operation. Optionally, in response to a click event of a media data upload control on the target interactive page, the media data loading event is triggered. Optionally, the media data loading operation includes the following steps: in response to the media data loading event being triggered, displaying a media data selection page, where the media data selection page includes a plurality of pieces of candidate media data; and determining selected candidate media data as the reference media data, and loading the reference media data into the first interactive window, where the first interactive window is displayed on the target interactive page.

The media data includes data in the form of an image or a video, etc.

The first control set includes a candidate control, a feature identification is displayed at a corresponding position of the candidate control, the first control set includes a plurality of candidate controls, the candidate control is configured for representing a feature identification associated with the reference media data and target media data, and feature identifications corresponding to different candidate controls represent different reference features.

For example, if the feature identification is an object XX, content displayed on the candidate control may be the object XX, and the reference feature may be a feature corresponding to the object XX in the reference media data.

The reference feature corresponding to the feature identification includes a clear feature type, a fuzzy feature type, etc. The reference feature of the clear feature type satisfies a first type condition, and the reference feature of the fuzzy feature type satisfies a second type condition. The first type condition is used for specifying that the type of the reference feature is clear. The second type condition is used for specifying that the type of the reference feature is fuzzy.

Optionally, if the type of the reference feature is clear, the reference feature corresponding to the feature identification in the reference media data is retained in the target media data. If the type of the reference feature is fuzzy, the target media data is generated based on at least one of multidimensional information such as a painting style, a composition or an element of the reference media data.

Exemplarily, in response to detecting a click operation on a media data upload control on the target interactive page, a media data loading event on the target interactive page is triggered, and a media data selection page is displayed on the target interactive page, where the media data selection page includes a plurality of pieces of candidate media data. In response to detecting a selection operation for the candidate media data, selected candidate media data is determined as the reference media data, and the reference media data is loaded into the first interactive window, where the first interactive window is displayed on the target interactive page.

Taking the media data as an image for an example, in response to a click operation on an image upload control on the target interactive page, an image loading event on the target interactive page is triggered, and a plurality of candidate images are displayed on the target interactive page in the form of a pop-up window. A selected candidate image is used as a reference image, and the first interactive window is generated according to the reference image and displayed on the target interactive page.

The first interactive window further includes a first control set, and the first control set includes a candidate control corresponding to a feature identification. Content on the candidate control is the feature identification, and the reference feature is represented by the feature identification. It is assumed that there are three candidate controls, and feature identifications on the respective candidate controls are A, B or C, feature recognition is performed on the reference media data based on the feature identifications A, B or C, to obtain a corresponding reference feature.

S120, in response to a click event on a target control in the first control set, a reference feature corresponding to the reference media data is determined based on a feature identification corresponding to the target control, and the reference feature is displayed in the first interactive window.

The target control represents a selected candidate control in the first control set. If the reference feature is A, and the type of the reference feature is clear, the reference feature corresponding to A in the reference media data is retained in the target media data. If the type of the reference feature is fuzzy, the reference media data as a whole is used as the reference feature. Thus, a preset media data generation model refers to information such as the painting style, the composition or the element of the reference media data in a process of generating the target media data.

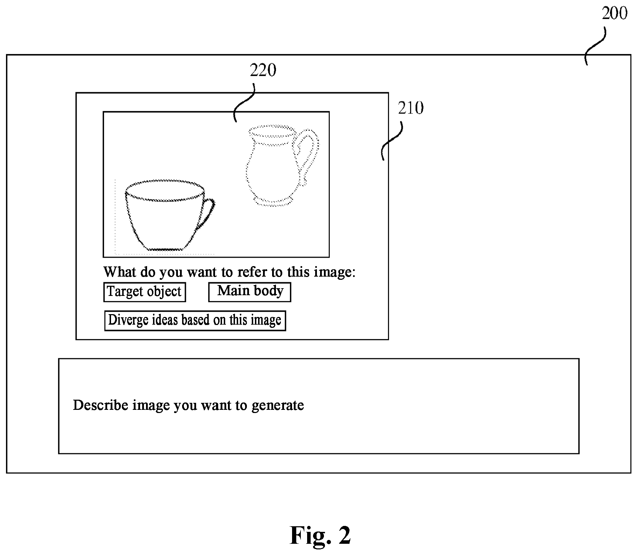

Exemplarily, in response to detecting a click operation on the target control in the first control set, the feature identification corresponding to the target control is acquired. For example, content displayed on the target control is used as the feature identification corresponding to the target control. Alternatively, content associated with the target control is used as the feature identification corresponding to the target control. If the feature identification is a "main body", it may be determined that the reference feature corresponding to the reference media data is a main body in the reference media data. The main body of the reference media data is displayed in the first interactive window. Fig. 2 is a schematic diagram of a first interactive window according to embodiments of the present disclosure. As shown in Fig. 2, a target interactive page 200 includes a first interactive window 210, and a main body of a reference image 220 displayed in the first interactive window 210 is a water cup.

In some embodiments, if the feature identification corresponding to the target control satisfies the first type condition, feature recognition is performed on the reference media data based on the feature identification to obtain the reference feature; and marking information of the reference feature and a feature update control are displayed in the first interactive window, where the feature update control is configured for triggering an update event for the reference feature by updating the marking information.

The marking information is used for significantly marking an area where the reference feature is located in the reference media data.

For example, the marking information may include a framing box, the reference feature in the reference media data is marked with the framing box in the first interactive window, and a feature in the framing box is the reference feature. If the reference feature in the reference media data includes features of different target objects, framing boxes of the different target objects are respectively determined, a default target object is determined according to a preset feature selection algorithm, and the framing box corresponding to the default target object is highlighted. If a remaining target object other than the default target object in the first interactive window is selected, a feature of the selected remaining target object is used as the reference feature. The framing box of the selected remaining target object is highlighted, and the originally highlighted framing box is set to gray. Optionally, thumbnails of the respective target objects are displayed at a set position of the first interactive window as feature update controls, and brightness of the thumbnail of the target object corresponding to the reference feature in the currently highlighted framing box is higher than that of other thumbnails. In response to a switching operation of the thumbnails, the switched thumbnail is highlighted, and the thumbnail before switching is set to gray, to implement switching of the reference feature.

Alternatively, the marking information may include a preset layer, the reference feature in the reference media data is covered with the preset layer in the first interactive window, and the feature covered by the preset layer is the reference feature. An editing area control is displayed at a set position in the first interactive window, and the editing area control includes one or more of editing controls such as an intelligent recognition control, a manual editing control, an erasing control or an undo control. Automatic recognition of the reference feature is implemented through the intelligent recognition control. The intelligently recognized reference feature is manually adjusted through the manual editing control. For example, an omitted feature is smeared through the manual editing control. Alternatively, an extra feature is erased through the erasing control.

Optionally, if the feature identification corresponding to the target control satisfies the first type condition, feature recognition is performed on the reference media data based on the feature identification, and a preset mask is displayed in the first interactive window in a feature recognition process. The preset mask includes preset prompt information, and the preset prompt information is used for prompting that feature recognition is currently performed. After the feature recognition is completed, the marking information of the reference feature and the feature update control are displayed through the first interactive window. If a cancel operation is detected in the feature recognition process, the feature identification operation is stopped. The reference media data is displayed in the first interactive window.

In some other embodiments, if the feature identification corresponding to the target control satisfies the second type condition, the reference media data is determined as the reference feature; and the reference media data and a reference degree control are displayed in the first interactive window, where the reference degree control is configured for setting a weight value corresponding to the reference feature. The weight value corresponding to the reference feature represents a reference degree of the target media data to the reference media data. If the weight value is high, the reference degree of the target media data to the reference media data is high, and if the weight value is low, the reference degree of the target media data to the reference media data is low.

S130, in response to a confirmation event for the reference feature, first prompt information is determined based on the reference media data and the feature identification, and the first prompt information is displayed on the target interactive page.

A trigger condition for the confirmation event may be that a preset control in the first interactive window is clicked. For example, in response to detecting that a save control in the first interactive window is clicked, the confirmation event for the reference feature is triggered.

The first prompt information is a combination of a picture and text. For example, the first prompt information may be a control with an image and text. Alternatively, the image and the text are marked as a whole through a label, to obtain the first prompt information. The image on the control may be the reference media data in a reduced size. If the reference media data is a reference image, the image is the reference image in the reduced size. If the reference media data is a video, the image on the control is a thumbnail of a preset frame in the video. The text may be determined based on the feature identification on the target control. For example, the image in the first prompt information may be an image with a water cup as the main body, and the text may be a reference main body.

Exemplarily, the reference feature and a save control are displayed in the first interactive window, and in response to detecting a click operation on the save control in the first interactive window, the confirmation event of the reference feature is triggered. The resolution of the reference media data is adjusted to obtain reduced reference media data, and the first prompt information is determined based on the reduced reference media data and a reference identification.

Optionally, the resolution of the reference image is adjusted to obtain a reduced reference image, and image prompt information is determined based on the reduced reference image and the reference feature.

Optionally, a preset video frame is acquired from the reference video, the resolution of the preset video frame is reduced to obtain a reduced reference video frame, and the first prompt information is determined based on the reduced reference video frame and the reference identification.

Taking the reference media data as a water cup image and the reference feature as a main body for an example, the water cup image is reduced to a set resolution, and the reduced water cup image is combined with a reference main body to obtain the first prompt information.

In some embodiments, the target interactive page further includes second prompt information, the second prompt information represents a prompt text used for generating the target media data, and the first prompt information and the second prompt information constitute target prompt information. At least one piece of first prompt information may be added before the second prompt information. Alternatively, at least one piece of first prompt information is added to the second prompt information according to a cursor position.

Optionally, before the second prompt information is input, a first preset sentence is displayed in an input box of the target interactive page, where the first preset sentence may include "describe information about media data you want to generate". In response to detecting the click operation on the save control in the first interactive window, the first prompt information and a second preset sentence are displayed in the input box of the target interactive page, where the second preset sentence may be determined based on the reference feature. For example, if the reference feature is the main body, the second preset sentence may include "describe a scene of the main body image you want to generate". Alternatively, if the reference feature is a target object, the second preset sentence may include "describe a scene of the target object you want to generate", etc. Alternatively, if the reference feature is "diverge more ideas based on this image", the first preset sentence is displayed after the first prompt information. A text input by the user for the first preset sentence or the second preset sentence is used as the second prompt information.

Optionally, displaying the first prompt information on the target interactive page includes: displaying a first form of the first prompt information on the target interactive page; in response to a display attribute of the first prompt information in the first form satisfying a first display condition, converting the first form to a second form and displaying the first prompt information in the second form on the target interactive page; and in response to a display attribute of the first prompt information in the second form satisfying a second display condition, reverting the second form to the first form and displaying the first prompt information in the first form on the target interactive page.

The first form and the second form represent different values of the display attribute of the first prompt information. If the display attribute is control brightness, the first form represents first brightness, the second form represents second brightness, and the first brightness is lower than the second brightness. For example, in response to detecting the click operation on the save control in the first interactive window, the first prompt information is displayed in the input box of the target interactive page with the first brightness. After the first prompt information is displayed with the first brightness for a set time, the brightness of the first prompt information is adjusted to the second brightness, and the first prompt information is displayed in the input box of the target interactive page with the second brightness. After the first prompt information is displayed with the second brightness for a set time, the brightness of the first prompt information is restored to the first brightness, and the first prompt information is displayed in the input box of the target interactive page with the first brightness. Alternatively, the display attribute may further include attributes such as font color, control color or bold font, which is not specifically limited in the embodiments of the present disclosure.

Optionally, after displaying the first prompt information on the target interactive page, the method further includes: in response to a deletion event for the first prompt information, displaying a selected state of the first prompt information on the target interactive page; and in response to a deletion event for the first prompt information in the selected state, deleting the first prompt information from the target interactive page.

If the first prompt information in the input box on the target interactive page needs to be deleted, and the cursor is located behind the first prompt information, the first prompt information is converted to the selected state in response to the deletion event for the first prompt information. The brightness of the first prompt information in the selected state is higher than that of the first prompt information in an unselected state, to prompt the user the selected first prompt information. If the deletion event of the first prompt information in the selected state is detected, the first prompt information is deleted from the input box.

S140, in response to a generation event for the target media data, the target media data is generated based on the first prompt information and the reference feature, and the target media data is displayed on the target interactive page.

A trigger condition for the generation event may include that a media data generation control on the target interactive page is triggered. The first prompt information is used for instructing a preset media data generation model to determine a type of a media data generation scenario.

Taking the media data as an image for an example, the preset media data generation model generates a target image based on the first prompt information and the reference feature. Taking the media data as a video for an example, the preset media data generation model generates a target video frame based on the first prompt information and the reference feature corresponding to respective video frames in a reference video, and generates a target video based on the target video frame.

In some embodiments, second prompt information may further be input on the target interactive page, and the preset media data generation model is instructed, through the second prompt information, to understand an expectation of the user for the target media data. For example, in response to detecting a click event on the media data generation control on the target interactive page, the first prompt information, the second prompt information and the reference feature are input into the preset media data generation model, and the target media data is outputted by the preset media data generation model.

If the media data generation scenario is a scenario where the type of the reference feature is clear, the target media data outputted by the preset media data generation model includes the reference feature. If the media data generation scenario is a scenario where the type of the reference feature is fuzzy, the preset media data generation model generates the target media data according to the painting style, the composition, the element, etc. of the reference media data.

If the media data generation scenario is a scenario where the type of the reference feature is fuzzy, the weight value is determined according to an interaction operation of the reference degree control in the first interactive window. In response to a click event of the media data generation control on the target interactive page, the target media data is generated using the preset media data generation model based on the first prompt information, the reference feature and the weight value.

Optionally, if one piece of first prompt information and at least two pieces of second prompt information are displayed in the input box of the target interactive page, there is no need to input the second prompt information, and the first prompt information, the second prompt information and the reference feature are input into the preset media data generation model, where the first prompt information is determined based on the feature identification that satisfies the first type condition, and the second prompt information is determined based on the feature identification that satisfies the second type condition.

Optionally, if one piece of first prompt information and one piece of second prompt information are displayed in the input box of the target interactive page, the second prompt information is acquired, and the first prompt information, the second prompt information and the reference feature are input into the preset media data generation model.

In embodiments of the present disclosure, after a plurality of pieces of target media data are generated, the respective pieces of target media data are displayed at a preset position on the target interactive page. The target interactive page further includes an editing control, a re-generation control, etc., where the editing control is used for triggering to display the target prompt information in the input box of the target interactive page, and the re-generation control is used for triggering the preset media data generation model to re-generate the target media data based on the first prompt information and the reference media data.

In the technical solution of the embodiments of the present disclosure, the target interactive page is displayed, the reference media data is loaded according to the media data loading event on the target interactive page, and the first interactive window is displayed on the target interactive page, where the first interactive window includes the reference media data and the first control set; then, in response to the click event of the target control in the first control set, the reference feature corresponding to the reference media data and the feature identification is determined according to the target control, and the reference feature is displayed in the first interactive window; then, in response to the confirmation event of the reference feature, the first prompt information is determined based on the reference media data and the feature identification, and the first prompt information is displayed on the target interactive page; and in response to the generation event for the target media data, the target media data is generated based on the first prompt information and the reference feature and displayed. In the embodiments of the present disclosure, the first prompt information and the reference feature are combined to implement visualization of the media data generation effect, solve the problem that the media data generation result does not meet the user's expectation, and improve the accuracy of the media data generation result and user experience.

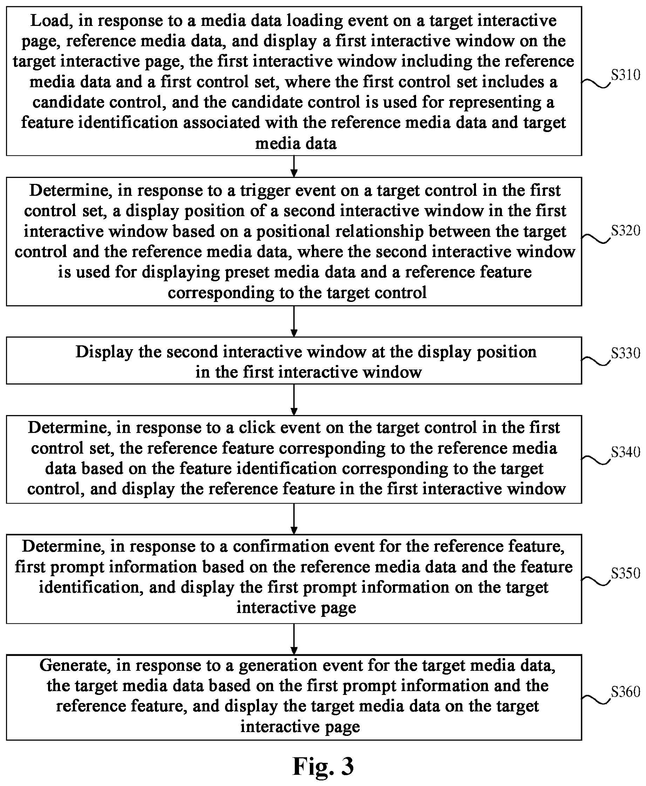

Fig. 3 is a schematic flowchart of another media data generation method according to embodiments of the present disclosure. In these embodiments of the present disclosure, a second interactive window is additionally defined on the basis of the above embodiments.

As shown in Fig. 3, the method includes:
S310, in response to a media data loading event on a target interactive page, reference media data is loaded, and a first interactive window is displayed on the target interactive page, the first interactive window including the reference media data and a first control set, where the first control set includes a candidate control, and the candidate control is configured for representing a feature identification associated with the reference media data and target media data.
S320, in response to a trigger event on a target control in the first control set, a display position of a second interactive window in the first interactive window is determined based on a positional relationship between the target control and the reference media data, where the second interactive window is configured for displaying preset media data and a reference feature corresponding to the target control.

The trigger event of the target control may be triggered by a mouse hovering over.

Exemplarily, in response to detecting that a stay time of a mouse on the target control exceeds a set time threshold, the trigger event of the target control is triggered. The determining a display position of a second interactive window in the first interactive window based on a positional relationship between the target control and the reference media data includes: determining a first object based on a first area corresponding to the target control in the first interactive window; determining a second object based on a second area corresponding to the reference media data in the first interactive window; determining a first alignment manner of the second interactive window and the target control based on a positional relationship between the first object and the second object; and determining the display position of the second interactive window in the first interactive window based on the first area and the first alignment manner.

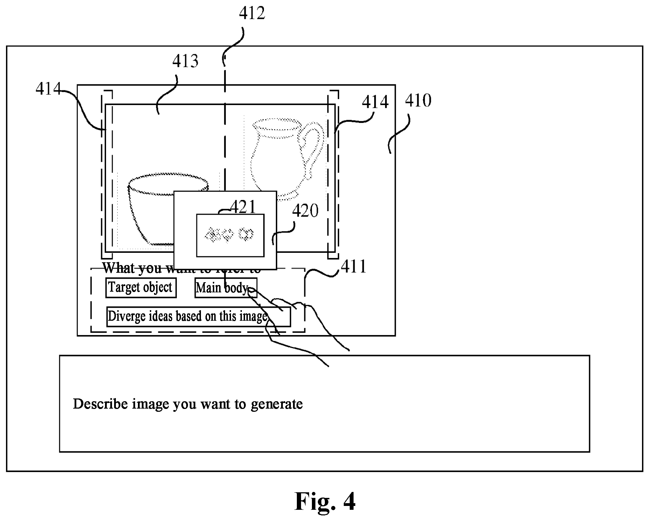

Fig. 4 is a schematic diagram of a display position of a second interactive window according to embodiments of the present disclosure. The first interactive window 410 includes a reference image 413 and a candidate control 411. A feature identification of the selected target control in the candidate control 411 is a main body. A center line of the target control is determined based on a first area corresponding to the target control 411 in the first interactive window 410 and used as a first object 412. An image boundary of the reference image 413 in a horizontal direction is determined based on a second area corresponding to the reference image 413 in the first interactive window 410 and used as a second object 414. The second object 414 includes an image left boundary and an image right boundary. If a distance between the first object 412 and the image left boundary is less than or equal to a preset distance threshold, it is determined that the second interactive window 420 is left-aligned with the target control 411. If the distance between the first object 412 and the image left boundary is greater than the preset distance threshold, and the distance between the first object 412 and the image right boundary is greater than the preset distance threshold, it is determined that the second interactive window 420 is center-aligned with the target control 411. If the distance between the first object 412 and the image left boundary is greater than the preset distance threshold, and the distance between the first object 412 and the image right boundary is less than or equal to the preset distance threshold, it is determined that the second interactive window 420 is right-aligned with the target control.

The display position of the second interactive window 420 in the first interactive window 410 is determined in combination with the alignment manner of the second interactive window 420 and the target control 411 and a position of the target control 411 in the first interactive window 410. The second interactive window 420 includes a preset image 421, and three flowers as a main body of the preset image are covered by a preset layer.

S330, the second interactive window is displayed at the display position in the first interactive window.

Exemplarily, the second interactive window is displayed at the display position in the first interactive window, and marking information of the reference feature in the preset media data is displayed in the second interactive window. For example, a recognition process of the reference feature in the preset media data may be displayed in the form of a dynamic picture. If the feature identification corresponding to the target control is the main body, the reference feature in the preset media data is covered with the preset layer.

S340, in response to a click event on a target control in the first control set, a reference feature corresponding to the reference media data is determined based on a feature identification corresponding to the target control, and the reference feature is displayed in the first interactive window.

Exemplarily, in response to detecting the click operation on the target control in the first control set, the reference feature corresponding to the reference media data is recognized based on the feature identification corresponding to the target control, and the preset mask is displayed in the first interactive window. The preset mask includes preset prompt information, and the preset prompt information is used for prompting that feature recognition is currently performed. If the feature identification corresponding to the target control is the main body, after the feature recognition is completed, the reference media data is displayed through the first interactive window, and the main body of the reference media data is covered with the preset layer. If the feature identification corresponding to the target control is the target object, after the feature recognition is completed, the reference media data is displayed through the first interactive window, and the target object in the reference media data is selected with the framing box.

If the feature identification corresponding to the target control is the main body, the editing area control is displayed at the set position in the first interactive window, and the editing area control includes one or more of editing controls such as the intelligent recognition control, the manual editing control, the erasing control or the undo control. In response to an interaction operation of the manual editing control, a new area corresponding to the manual editing control is recognized, the new area is covered with the preset layer, to update the reference feature based on a feature of the new area. In response to an interaction operation of the erasing control, an erasing area corresponding to the erasing control is recognized, and the preset layer corresponding to the erasing area is deleted, to delete a feature corresponding to the erasing area in the reference feature.

S350, in response to a confirmation event for the reference feature, first prompt information is determined based on the reference media data and the feature identification, and the first prompt information is displayed on the target interactive page.

S360, in response to a generation event for the target media data, the target media data is generated based on the first prompt information and the reference feature, and the target media data is displayed on the target interactive page.

In the technical solution of the embodiments of the present disclosure, the trigger event of the target control is acquired, the display position of the second interactive window in the first interactive window is determined based on the positional relationship between the target control and the reference media data, then the second interactive window is displayed at the display position in the first interactive window, and the recognition process and the recognition result of the reference feature are displayed through the preset media data in the second interactive window, to realize visualization of the reference feature corresponding to the target control, and avoid a large deviation between the target media data and an expectation caused by mis-selecting the target control.

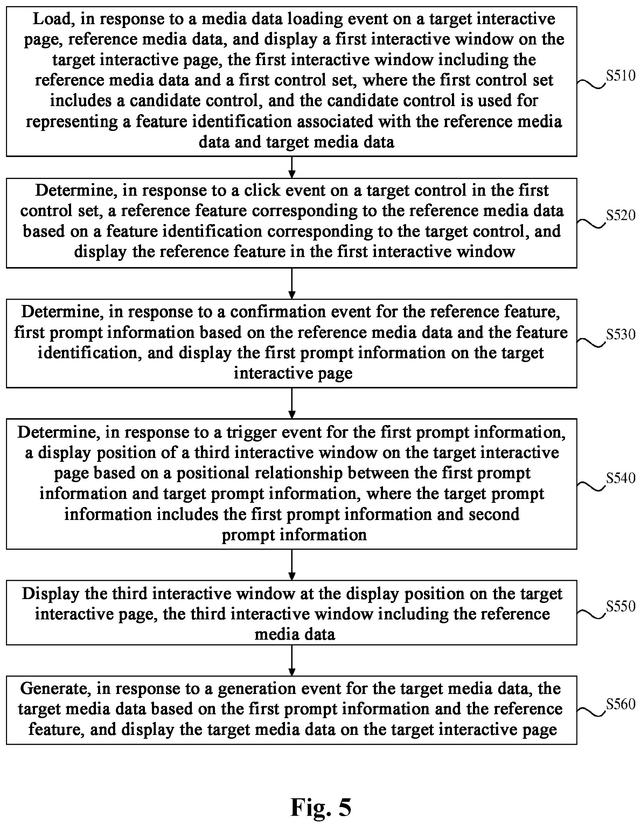

Fig. 5 is a schematic flowchart of another media data generation method according to embodiments of the present disclosure. In these embodiments of the present disclosure, a third interactive window is additionally defined on the basis of the above embodiments.

As shown in Fig. 5, the method includes:
S510, in response to a media data loading event on a target interactive page, reference media data is loaded, and a first interactive window is displayed on the target interactive page, the first interactive window including the reference media data and a first control set, where the first control set includes a candidate control, and the candidate control is configured for representing a feature identification associated with the reference media data and target media data.
S520, in response to a click event on a target control in the first control set, a reference feature corresponding to the reference media data is determined based on a feature identification corresponding to the target control, and the reference feature is displayed in the first interactive window.
S530, in response to a confirmation event for the reference feature, first prompt information is determined based on the reference media data and the feature identification, and the first prompt information is displayed on the target interactive page.
S540, in response to a trigger event for the first prompt information, a display position of a third interactive window on the target interactive page is determined based on a positional relationship between the first prompt information and target prompt information, where the target prompt information includes the first prompt information and second prompt information.

Exemplarily, in response to detecting that a stay time of a mouse on the first prompt information exceeds a set time threshold, the trigger event for the first prompt information is triggered. A third object is determined based on a third area corresponding to the first prompt information on the target interactive page. A fourth object is determined based on a fourth area corresponding to the target prompt information on the target interactive page. A second alignment manner of the third interactive window and the first prompt information is determined based on a positional relationship between the third object and the fourth object. The display position of the third interactive window on the target interactive page is determined based on the third area and the second alignment manner.

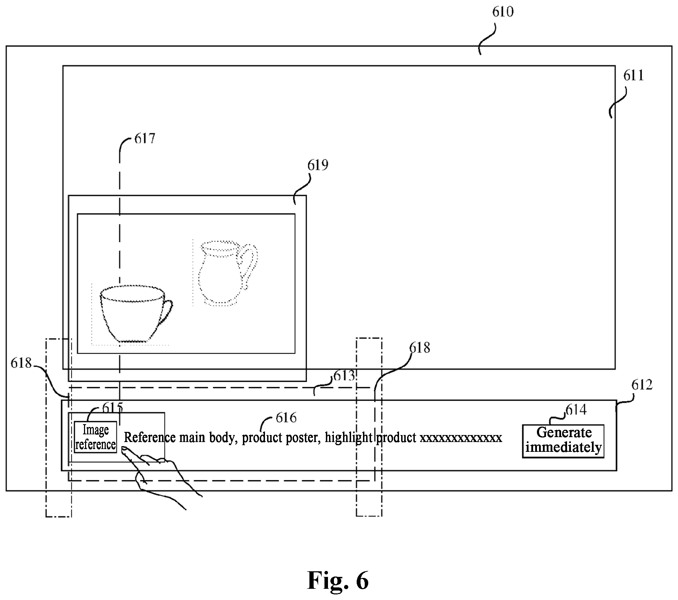

Fig. 6 is a schematic diagram of a display position of a third interactive window according to embodiments of the present disclosure. The target interactive page 610 includes a target image display area 611, an input box 612, etc. The input box 612 includes target prompt information 613 and a generation control 614. The target prompt information 613 includes first prompt information 615, second prompt information 616, etc. A center line of the first prompt information 615 is determined based on the third area corresponding to the first prompt information 615 and used as a third object 617. A content boundary of the target prompt information 613 in a horizontal direction is determined based on the fourth area corresponding to the target prompt information 613 and used as a fourth object 618. The fourth object 618 includes a content left boundary and a content right boundary. If a distance between the third object 617 and the content left boundary is less than or equal to a preset distance threshold, it is determined that the third interactive window 619 is left-aligned with the target prompt information 613. If the distance between the third object 617 and the content left boundary is greater than the preset distance threshold, and the distance between the third object 617 and the content right boundary is greater than the preset distance threshold, it is determined that the third interactive window 619 is center-aligned with the target prompt information 613. If the distance between the third object 617 and the content left boundary is greater than the preset distance threshold, and the distance between the third object 617 and the content right boundary is less than or equal to the preset distance threshold, it is determined that the third interactive window 619 is right-aligned with the target prompt information 613.

The display position of the third interactive window 619 on the target interactive page 610 is determined in combination with the alignment manner of the third interactive window 619 and the target prompt information 613 and a position of the target prompt information 613 in the input box.

S550, the third interactive window is displayed at the display position on the target interactive page, the third interactive window including the reference media data.

Exemplarily, the third interactive window is displayed at the display position on the target interactive page, the reference media data is adjusted according to a length and a height of the third interactive window, so that the adjusted reference media data is adapted to the third interactive window, and the adjusted reference media data is displayed in the third interactive window. If the mouse moves away from the first prompt information in the input box, the third interactive window is closed.

S560, in response to a generation event for the target media data, the target media data is generated based on the first prompt information and the reference feature, and the target media data is displayed on the target interactive page.

Exemplarily, in response to detecting a click operation on the generation control in the input box, the generation event of the target media data is triggered. The target media data is generated based on the first prompt information, the second prompt information and the reference feature, and the target media data is displayed in the media data display area of the target interactive page.

Optionally, the media data display area of the target interactive page further includes the target prompt information, and the target prompt information includes the first prompt information and the second prompt information. If the trigger event for the first prompt information is detected, a first distance between a center line of the first prompt information and the content left boundary of the target prompt information is determined. If the first distance is less than or equal to a set distance threshold, the third interactive window is displayed in the media data display area in a manner of being left-aligned with the first prompt information. If the first distance is greater than the set distance threshold, a second distance between the center line of the first prompt information and the content right boundary of the target prompt information is determined. If the second distance is greater than the set distance threshold, the third interactive window is displayed in the media data display area in a manner of being center-aligned with the first prompt information. If the first distance is greater than the set distance threshold, and the second distance is less than or equal to the set distance threshold, the third interactive window is displayed in the media data display area in a manner of being right-aligned with the first prompt information.

In the technical solution of the embodiments of the present disclosure, in response to the trigger event for the first prompt information, the display position of the third interactive window on the target interactive page is determined based on the positional relationship between the first prompt information and the target prompt information, then the third interactive window is displayed at the display position on the target interactive page, and the reference media data is displayed through the third interactive window, to realize visualization of the reference media data, thereby quickly determining whether there is a problem of misselecting the reference media data, further improving the accuracy of the target media data, and finding the problem of misselecting the reference media data before the target media data is generated, to save computing resources.

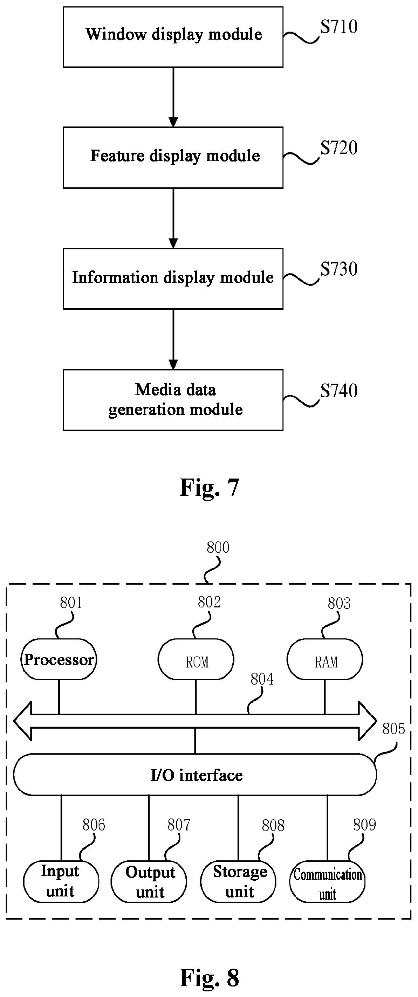

Fig. 7 is a schematic diagram of a structure of a media data generation apparatus according to embodiments of the present disclosure. The apparatus may be implemented in the form of software and/or hardware, and optionally, by an electronic device, where the electronic device may be a mobile terminal, a PC, a server, etc.

As shown in Fig. 7, the apparatus includes: a window display module 710, a feature display module 720, an information display module 730 and a media data generation module 740.

The window display module 710 is configured to load, in response to a media data loading event on a target interactive page, reference media data, and display a first interactive window on the target interactive page, the first interactive window including the reference media data and a first control set, where the first control set includes a candidate control, and the candidate control is configured for representing a feature identification associated with the reference media data and target media data;
the feature display module 720 is configured to determine, in response to a click event on a target control in the first control set, a reference feature corresponding to the reference media data based on a feature identification corresponding to the target control, and display the reference feature in the first interactive window;
the information display module 730 is configured to determine, in response to a confirmation event for the reference feature, first prompt information based on the reference media data and the feature identification, and display the first prompt information on the target interactive page; and
the media data generation module 740 is configured to generate, in response to a generation event for the target media data, the target media data based on the first prompt information and the reference feature, and display the target media data on the target interactive page.

Optionally, the apparatus further includes:
a first position determination module, configured to, after displaying the first interactive window on the target interactive page, determine, in response to a trigger event on the target control in the first control set, a display position of a second interactive window in the first interactive window based on a positional relationship between the target control and the reference media data, where the second interactive window is configured for displaying preset media data and a reference feature corresponding to the target control; and
a first window display module, configured to display the second interactive window at the display position in the first interactive window.

Further, the first position determination module is further configured to:
determine a first object based on a first area corresponding to the target control in the first interactive window;
determine a second object based on a second area corresponding to the reference media data in the first interactive window;
determine a first alignment manner of the second interactive window and the target control based on a positional relationship between the first object and the second object; and
determine the display position of the second interactive window in the first interactive window based on the first area and the first alignment manner.

Optionally, the information display module 730 is further configured to:
adjust a resolution of the reference media data to obtain reduced reference media data, and determine the first prompt information based on the reduced reference media data and a reference identification.

Optionally, displaying the first prompt information on the target interactive page includes:
displaying a first form of the first prompt information on the target interactive page;
converting, in response to a display attribute of the first prompt information in the first form satisfying a first display condition, the first form to a second form, and displaying the first prompt information in the second form on the target interactive page; and
reverting, in response to a display attribute of the first prompt information in the second form satisfying a second display condition, the second form to the first form, and displaying the first prompt information in the first form on the target interactive page.

Optionally, the apparatus further includes:
a second position determination module, configured to after displaying the first prompt information on the target interactive page, determine, in response to a trigger event for the first prompt information, a display position of a third interactive window on the target interactive page based on a positional relationship between the first prompt information and target prompt information, where the target prompt information includes the first prompt information and second prompt information, and the second prompt information represents a prompt text used for generating the target media data; and
a second window display module, configured to display the third interactive window at the display position on the target interactive page, the third interactive window including the reference media data.

Optionally, the second position determination module is further configured to:
determine a third object based on a third area corresponding to the first prompt information on the target interactive page;
determine a fourth object based on a fourth area corresponding to the target prompt information on the target interactive page;
determine a second alignment manner of the third interactive window and the first prompt information based on a positional relationship between the third object and the fourth object; and
determine the display position of the third interactive window on the target interactive page based on the third area and the second alignment manner.

Optionally, the apparatus further includes a deletion module, configured to:
after displaying the first prompt information on the target interactive page, display, in response to a deletion event for the first prompt information, a selected state of the first prompt information on the target interactive page; and
delete, in response to a deletion event for the first prompt information in the selected state, the first prompt information from the target interactive page.

Optionally, the feature display module 720 is further configured to:
perform, in response to the feature identification corresponding to the target control satisfying a first type condition, feature recognition on the reference media data based on the feature identification to obtain the reference feature; and
display marking information of the reference feature and a feature update control in the first interactive window, where the feature update control is configured for triggering an update event for the reference feature by updating the marking information.

Optionally, the feature display module 720 is further configured to:
determine, in response to the feature identification corresponding to the target control satisfying a second type condition, the reference media data as the reference feature; and
display the reference media data and a reference degree control in the first interactive window, where the reference degree control is configured for setting a weight value corresponding to the reference feature.

Optionally, the media data generation module 740 is further configured to:
generate, in response to a click event on a media data generation control on the target interactive page, the target media data using a preset media data generation model based on the first prompt information, the reference feature, and the weight value.

The media data generation apparatus provided by the embodiments of the present disclosure may perform the media data generation method provided by any embodiment of the present disclosure, and has corresponding functional modules and beneficial effects for performing the method.

It is worth noting that the units and modules included in the above apparatus are only divided according to functional logic, but are not limited to the above division, as long as the corresponding functions may be realized; in addition, the specific names of the functional units are only for the convenience of distinguishing from each other, and are not used to limit the protection scope of the embodiments of the present disclosure.

Fig. 8 is a schematic diagram of a structure of an electronic device according to embodiments of the present disclosure. Reference is made to Fig. 8 below, which illustrates a schematic diagram of a structure of an electronic device (such as a terminal device or a server in Fig. 8) 800 suitable for implementing embodiments of the present disclosure. The terminal device in the embodiments of the present disclosure may include, but is not limited to, mobile terminals such as a mobile phone, a notebook computer, a digital broadcast receiver, a personal digital assistant (PDA), a tablet computer, a portable media player (PMP), a vehicle-mounted terminal (e.g., a vehicle-mounted navigation terminal), etc., and fixed terminals such as a digital TV, a desktop computer, etc. The electronic device shown in Fig. 8 is only an example, and should not impose any limitation on the functions and scope of use of the embodiments of the present disclosure.

As shown in Fig. 8, the electronic device 800 may include a processor (such as a central processing unit, a graphics processor, etc.) 801, which may perform various appropriate actions and processes according to a program stored in a read-only memory (ROM) 802 or a program loaded from a storage unit 808 into a random access memory (RAM) 803. The RAM 803 further stores various programs and data required for events of the electronic device 800. The processor 801, the ROM 802 and the RAM 803 are connected to each other through a bus 804. An editing/output (I/O) interface 805 is also connected to the bus 804.

Typically, the following apparatuses may be connected to the I/O interface 805: an input unit 806 including, for example, a touch screen, a touchpad, a keyboard, a mouse, a camera, a microphone, an accelerometer, a gyroscope, etc.; an output unit 807 including, for example, a liquid crystal display (LCD), a speaker, a vibrator, etc.; a storage unit 808 including, for example, a magnetic tape, a hard disk, etc.; and a communication unit 809. The communication unit 809 may allow the electronic device 800 to perform wireless or wired communication with other devices to exchange data. Although Fig. 8 shows the electronic device 800 with various apparatuses, it should be understood that it is not required to implement or have all of the illustrated apparatuses. Alternatively, more or fewer apparatuses may be implemented or provided.

In particular, according to the embodiments of the present disclosure, the process described above with reference to the flowcharts may be implemented as a computer software program. For example, embodiments of the present disclosure include a computer program product, which includes a computer program carried on a non-transitory computer-readable medium, where the computer program includes program code for performing the method shown in the flowchart. In such an embodiment, the computer program may be downloaded and installed from a network through the communication unit 809, or installed from the storage unit 808, or installed from the ROM 802. When the computer program is executed by the processor 801, the above-mentioned functions defined in the method of the embodiments of the present disclosure are executed.

The names of messages or information exchanged between a plurality of apparatuses in the implementations of the present disclosure are for illustrative purposes only, and are not intended to limit the scope of these messages or information.

The electronic device provided by the embodiments of the present disclosure belongs to the same inventive concept as the media data generation method provided by the above-mentioned embodiment. For technical details not described in detail in this embodiment, reference may be made to the above-mentioned embodiment, and these embodiments have the same beneficial effects as the above-mentioned embodiment.

Embodiments of the present disclosure provide a computer storage medium having a computer program stored thereon, where the program, when executed by a processor, implements the media data generation method provided by the above-mentioned embodiments.

It should be noted that the above-mentioned computer-readable medium in the present disclosure may be a computer-readable signal medium, a computer-readable storage medium, or any combination thereof. The computer-readable storage medium may be, for example, but not limited to, an electrical, magnetic, optical, electromagnetic, infrared, or semiconductor system, apparatus or device, or any combination thereof. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program, which may be used by or in combination with an instruction execution system, apparatus or device. In the present disclosure, the computer-readable signal medium may include a data signal propagated on a baseband or as a part of a carrier, and computer-readable program code is carried therein. The data signal propagated in this manner may be in multiple forms, and includes, but is not limited to, an electromagnetic signal, an optical signal, or any suitable combination thereof. The computer-readable signal medium may also be any computer-readable medium other than the computer-readable storage medium, and the computer-readable signal medium may send, propagate or transmit a program used by or in combination with an instruction execution system, apparatus or device. The program code contained on the computer-readable medium may be transmitted in any suitable medium, including but not limited to: a wire, an optical cable, a radio frequency (RF), etc., or any suitable combination thereof.

In some implementations, a client and a server may communicate using any currently known or future developed network protocol, such as the hypertext transfer protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above-mentioned computer-readable medium may be included in the above-mentioned electronic device, or may exist alone without being assembled into the electronic device.

The above-mentioned computer-readable medium carries one or more programs, which, when executed by the electronic device, cause the electronic device to:
load, in response to a media data loading event on a target interactive page, reference media data, and displaying a first interactive window on the target interactive page, the first interactive window including the reference media data and a first control set, where the first control set includes a candidate control, and the candidate control is configured for representing a feature identification associated with the reference media data and target media data;
determine, in response to a click event on a target control in the first control set, a reference feature corresponding to the reference media data based on a feature identification corresponding to the target control, and displaying the reference feature in the first interactive window;
determine, in response to a confirmation event for the reference feature, first prompt information based on the reference media data and the feature identification, and displaying the first prompt information on the target interactive page; and
generate, in response to a generation event for the target media data, the target media data based on the first prompt information and the reference feature, and displaying the target media data on the target interactive page.

The computer program code for executing the events of the present disclosure may be written in one or more programming languages or a combination thereof, where the above-mentioned programming languages include but are not limited to object-oriented programming languages such as Java, Smalltalk, C++, and further include conventional procedural programming languages such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of involving a remote computer, the remote computer may be connected to a computer of a user through any kind of network, including a local area network (LAN) or a wide area network (WAN), or may be connected to an external computer (for example, connected by using Internet provided by an Internet service provider).

The flowcharts and block diagrams in the drawings illustrate the possibly implemented architectures, functions and events of the system, the method and the computer program product according to various embodiments of the present disclosure. In this regard, each block in the flowchart or block diagram may represent a module, program segment, or part of code, which includes one or more executable instructions for implementing a specified logical function. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or events, or may be implemented by a combination of dedicated hardware and computer instructions.

The involved units described in the embodiments of the present disclosure may be implemented by software or hardware. The name of a unit does not constitute a limitation on the unit itself under certain circumstances.

The functions described herein above may be performed at least partially by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electrical, magnetic, optical, electromagnetic, infrared, or semiconductor system, apparatus or device, or any suitable combination thereof. More specific examples of the machine-readable storage medium would include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

The above description only illustrates preferred embodiments of the present disclosure and applied technical principles. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above disclosed concept, for example, a technical solution formed by replacing the above features with technical features with similar functions disclosed in the present disclosure (but not limited thereto).

Furthermore, although the events are depicted in a particular order, this should not be understood as requiring the events to be performed in the particular order shown or in a sequential order. Under certain circumstances, multitasking and parallel processing may be advantageous. Likewise, although the above discussion contains a number of specific implementation details, these should not be construed as limiting the scope of the present disclosure. Certain features described in the context of separate embodiments may also be implemented in a single embodiment in combination. Conversely, various features described in the context of a single embodiment may also be implemented in a plurality of embodiments individually or in any suitable subcombination.

Although the subject matter has been described in terms specific to the structural features and/or method logic actions, it should be understood that the subject matter defined in the appended claims is not necessarily limited to the specific features or actions described above. Conversely, the specific features and actions described above are only exemplary forms of implementing the claims.

## Claims

1. A media data generation method, comprising:
loading, in response to a media data loading event on a target interactive page, reference media data, and displaying a first interactive window on the target interactive page, the first interactive window comprising the reference media data and a first control set, wherein the first control set comprises a candidate control, and the candidate control is configured for representing a feature identification associated with the reference media data and target media data;
determining, in response to a click event on a target control in the first control set, a reference feature corresponding to the reference media data based on a feature identification corresponding to the target control, and displaying the reference feature in the first interactive window;
determining, in response to a confirmation event for the reference feature, first prompt information based on the reference media data and the feature identification, and displaying the first prompt information on the target interactive page; and
generating, in response to a generation event for the target media data, the target media data based on the first prompt information and the reference feature, and displaying the target media data on the target interactive page.

2. The method of claim 1, wherein after displaying the first interactive window on the target interactive page, the method further comprises:
determining, in response to a trigger event on the target control in the first control set, a display position of a second interactive window in the first interactive window based on a positional relationship between the target control and the reference media data, wherein the second interactive window is configured for displaying preset media data and a reference feature corresponding to the target control; and
displaying the second interactive window at the display position in the first interactive window.

3. The method of claim 2, wherein determining the display position of the second interactive window in the first interactive window based on the positional relationship between the target control and the reference media data comprises:
determining a first object based on a first area corresponding to the target control in the first interactive window;
determining a second object based on a second area corresponding to the reference media data in the first interactive window;
determining a first alignment manner of the second interactive window and the target control based on a positional relationship between the first object and the second object; and
determining the display position of the second interactive window in the first interactive window based on the first area and the first alignment manner.

4. The method of claim 1, wherein determining the first prompt information based on the reference media data and the feature identification comprises:
adjusting a resolution of the reference media data to obtain reduced reference media data, and determining the first prompt information based on the reduced reference media data and a reference identification.

5. The method of claim 1, wherein displaying the first prompt information on the target interactive page comprises:
displaying a first form of the first prompt information on the target interactive page;
converting, in response to a display attribute of the first prompt information in the first form satisfying a first display condition, the first form to a second form, and displaying the first prompt information in the second form on the target interactive page; and
reverting, in response to a display attribute of the first prompt information in the second form satisfying a second display condition, the second form to the first form, and displaying the first prompt information in the first form on the target interactive page.

6. The method of claim 1, wherein after displaying the first prompt information on the target interactive page, the method further comprises:
determining, in response to a trigger event for the first prompt information, a display position of a third interactive window on the target interactive page based on a positional relationship between the first prompt information and target prompt information, wherein the target prompt information comprises the first prompt information and second prompt information, and the second prompt information represents a prompt text used for generating the target media data; and
displaying the third interactive window at the display position on the target interactive page, the third interactive window comprising the reference media data.

7. The method of claim 6, wherein determining the display position of the third interactive window on the target interactive page based on the positional relationship between the first prompt information and the target prompt information comprises:
determining a third object based on a third area corresponding to the first prompt information on the target interactive page;
determining a fourth object based on a fourth area corresponding to the target prompt information on the target interactive page;
determining a second alignment manner of the third interactive window and the first prompt information based on a positional relationship between the third object and the fourth object; and
determining the display position of the third interactive window on the target interactive page based on the third area and the second alignment manner.

8. The method of claim 1, wherein after displaying the first prompt information on the target interactive page, the method further comprises:
displaying, in response to a deletion event for the first prompt information, a selected state of the first prompt information on the target interactive page; and
deleting, in response to a deletion event for the first prompt information in the selected state, the first prompt information from the target interactive page.

9. The method of claim 1, wherein determining the reference feature corresponding to the reference media data based on the feature identification corresponding to the target control and displaying the reference feature in the first interactive window comprises:
performing, in response to the feature identification corresponding to the target control satisfying a first type condition, feature recognition on the reference media data based on the feature identification to obtain the reference feature; and
displaying marking information of the reference feature and a feature update control in the first interactive window, wherein the feature update control is configured for triggering an update event for the reference feature by updating the marking information.

10. The method of claim 1, wherein determining the reference feature corresponding to the reference media data based on the feature identification corresponding to the target control and displaying the reference feature in the first interactive window comprises:
determining, in response to the feature identification corresponding to the target control satisfying a second type condition, the reference media data as the reference feature; and
displaying the reference media data and a reference degree control in the first interactive window, wherein the reference degree control is configured for setting a weight value corresponding to the reference feature.

11. The method of claim 10, wherein generating, in response to the generation event for the target media data, the target media data based on the first prompt information and the reference feature comprises:
generating, in response to a click event on a media data generation control on the target interactive page, the target media data using a preset media data generation model based on the first prompt information, the reference feature, and the weight value.

12. A media data generation apparatus, comprising:
a window display module, configured to load, in response to a media data loading event on a target interactive page, reference media data, and display a first interactive window on the target interactive page, the first interactive window comprising the reference media data and a first control set, wherein the first control set comprises a candidate control, and the candidate control is configured for representing a feature identification associated with the reference media data and target media data;
a feature display module, configured to determine, in response to a click event on a target control in the first control set, a reference feature corresponding to the reference media data based on a feature identification corresponding to the target control, and display the reference feature in the first interactive window;
an information display module, configured to determine, in response to a confirmation event for the reference feature, first prompt information based on the reference media data and the feature identification, and display the first prompt information on the target interactive page; and
a media data generation module, configured to generate, in response to a generation event for the target media data, the target media data based on the first prompt information and the reference feature, and display the target media data on the target interactive page.

13. An electronic device, comprising:
one or more processors; and
a storage configured to store one or more programs,
wherein the one or more programs, when executed by the one or more processors, cause the one or more processors to implement the media data generation method of any of claims 1 to 11.

14. A storage medium comprising computer-executable instructions, the computer-executable instructions, when executed by a computer processor, are configured to perform the media data generation method of any of claims 1 to 11.
